Europäisches Patentamt

European Patent Office

Office européen des brevets

(19)

(11) Numéro de publication: **0 098 188**
**B1**

(12) **FASCICULE DE BREVET EUROPEEN**

(45) Date de publication du fascicule du brevet:
**07.01.87**

(21) Numéro de dépôt: **83401181.9**

(22) Date de dépôt: **09.06.83**

(51) Int. Cl.⁴: **G 01 N 3/14**, G 21 C 17/00

(54) Dispositif de vérification à distance de la caractéristique d'un ressort.

(30) Priorité: **14.06.82 FR 8210317**

(43) Date de publication de la demande:
**11.01.84 Bulletin 84/2**

(45) Mention de la délivrance du brevet:
**07.01.87 Bulletin 87/2**

(84) Etats contractants désignés:
**BE DE GB IT**

(56) Documents cités:
**FR - A - 2 482 299**
**US - A - 2 296 749**

(73) Titulaire: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Zava, Francis, Le Jardin des Hespérides Allée de la Ponsonne, F-04100 Manosque (FR)**
Inventeur: **Coppa, Louis, Parc Aurélia 3, Avenue du Val Saint-André, F-13100 Aix en Provence (FR)**

(74) Mandataire: **Mongrédien, André et al, c/o BREVATOME 25, rue de Ponthieu, F-75008 Paris (FR)**

## Description

L'invention a pour objet un dispositif de vérification à distance de la caractéristique d'un ressort.

L'invention concerne un dispositif comportant des moyens pour appliquer des efforts connus sur le ressort et des moyens pour en mesurer la flèche correspondante, dans lequel les moyens pour appliquer les efforts connus sont constitués par un ensemble de masses connues déplaçables en translation selon une direction verticale, chacune des masses pouvant elle-même être déplacée verticalement dans certaines limites par rapport aux autres masses de sorte que, lorsqu'on les descend, leurs poids sont supportés successivement par le ressort et, de ce fait, s'additionnent, des moyens pour déterminer le moment où, au cours de la descente de l'ensemble, une masse donnée repose sur le ressort, les moyens pour mesurer la flèche du ressort étant constitués par des moyens pour mesurer le déplacement de la masse inférieure par rapport à un point de repère fixe par rapport au ressort. Un tel dispositif est connu du document US-A 2 296 749. Ce dispositif est destiné à tester une pièce telle qu'un ressort hélicoïdal. Il comporte une enclume inférieure fixe sur laquelle repose le ressort à tester, une tige mobile selon une direction verticale terminée par une enclume supérieure et supportant un poids. Au-dessus du poids, on trouve un deuxième et un troisième poids. Le dispositif comporte une came mobile à trois positions déterminées par des encoches. La rotation de la came permet d'additionner les poids sur la tige, et par conséquent sur le ressort à tester. Un comparateur mesure la flèche du ressort.

On connaît également (FR-A 2 482 299) un dispositif de mise en charge ou décharge d'une éprouvette soumise à une force qui augmente à l'aide de masses appliquées successivement. La masse supérieure est suspendue à l'extrémité d'un bras de levier par l'intermédiaire d'un crochet. Les autres masses sont accrochées l'une à l'autre. Sous la masse inférieure on trouve un plateau qui permet de soulever successivement les masses et donc de décharger l'extrémité du bras de levier de leur poids. Chaque masse est reliée à la masse inférieure par une vis réalisée en un matériau isolant. Ainsi, lorsqu'une masse donnée est suspendue à la masse qui lui est immédiatement supérieure, il n'y a pas de contact électrique entre elles. Au contraire, lorsqu'une masse donnée repose sur la masse immédiatement inférieure, un contact électrique est établi. Ceci constitue un moyen pour déterminer quelles masses reposent sur le plateau et par conséquent pour en déduire les masses qui restent suspendues à l'extrémité du bras de levier. On peut donc connaître la charge qui est appliquée à l'éprouvette.

L'invention a pour objet un dispositif de vérification à distance de la caractéristique d'un ressort. Par «vérification à distance», on veut dire que l'opérateur ne peut accéder directement au ressort à vérifier.

Un problème de ce genre se pose lorsqu'il est difficile ou dangereux d'approcher du ressort à vérifier. C'est le cas par exemple lorsqu'il s'agit de vérifier les ressorts d'une pièce d'extrémité d'assemblage combustible de réacteur nucléaire irradié. Pour éviter l'irradiation du personnel, les assemblages irradiés sont entreposés dans une piscine sous une hauteur d'eau minimale. En conséquence les ressorts de l'assemblage combustible doivent être vérifiés sous eau et à distance. Le dispositif de l'invention permet de résoudre ce problème.

Il se caractérise en ce que les moyens pour déterminer le comment où une masse donnée repose sur le ressort sont constitués par un dynamomètre solidaire d'un point de fixation déplaçable verticalement en translation, l'ensemble des masses étant suspendu au crochet du dynamomètre, et en ce qu'il porte trois masses, respectivement:

– une masse P2 de forme cylindrique allongée, suspendue par sa partie supérieure au crochet du dynamomètre, et présentant, à son extrémité supérieure, un épaulement;

– une masse P1 également de forme cylindrique allongée, disposée sous la masse P2 et suspendue à la partie inférieure de cette dernière avec un jeu axial;

– une colonne C se présentant sous la forme d'un cylindre creux dans lequel sont disposées les masses P1 et P2, ladite colonne comportant un épaulement intérieur par lequel elle repose sur l'épaulement de la masse P2 lorsque l'ensemble des masses est suspendu.

Ainsi, le dynamomètre peut être accroché au crochet d'un palan qui permet de faire descendre progressivement l'ensemble des masses. Au début de la descente, le dynamomètre indique le poids de l'ensemble des masses. Lorsque la masse inférieure repose sur le ressort, l'indication donnée par le dynamomètre diminue du poids de cette dernière. On effectue alors la mesure de la flèche correspondante du ressort.

Afin que le poids des masses repose correctement sur le ressort à vérifier, ces masses doivent être guidées verticalement an translation. Les masses P1 et P2 sont guidées à l'intérieur de la colonne C qui doit elle-même être guidée. De préférence, ce guidage est réalisé au moyen d'une colonne de centrage qui prend appui sur une pièce solidaire de l'extrémité fixe du ressort et par des moyens pour assurer un guidage de la colonne C par rapport à la colonne de centrage.

Cette dernière réalisation est particulièrement adaptée à la vérification des quatre ressorts d'une pièce d'extrémité d'assemblage combustible, car elle permet, par simple pivotement de la colonne C autour de la colonne de guidage, de vérifier successivement les quatre ressorts de la pièce d'extrémité.

De préférence, les moyens de guidage sont constitués par des colliers.

La colonne peut être fermée à son extrémité inférieure. Dans ce cas, la masse inférieure est constituée par la colonne elle-même. Pour mesurer la flèche du ressort, il suffit de mesurer le déplacement de sa partie supérieure, qui émerge de l'eau. De préférence, on utilise un comparateur qui mesure le déplacement de l'extrémité supérieure de la colonne par rapport à un repère fixe pris sur la colonne de centrage.

Selon une variante, la colonne est ouverte à son extrémité inférieure. Dans ce cas, la masse inférieure est la masse P1. Il est alors nécessaire de répercuter le déplacement de cette masse inférieure au-dessus du niveau du liquide. Une tige, dont une extrémité est solidaire de la masse inférieure, permet d'obtenir ce résultat. Un comparateur mesure le déplacement de l'extrémité supérieure de la tige par rapport à un repère fixe pris sur la colonne de centrage.

Enfin, selon une autre variante, la colonne est ouverte à son extrémité inférieure et les moyens de guidage des masses P1 et P2 sont constitués uniquement par la colonne elle-même. Pendant le fonctionnement du dispositif, la colonne repose sur une pièce fixe solidaire d'une extrémité du ressort. Comme dans la variante précédente, les moyens pour mesurer le déplacement de la masse inférieure sont constitués par une tige dont une extrémité est solidaire de la masse inférieure P1 et par un comparateur qui mesure les déplacements de l'extrémité supérieure de cette tige par rapport à un repère fixe pris sur la colonne de centrage.

D'autres caractéristiques et avantages de l'invention apparaîtront à la lecture de la description qui suit de plusieurs exemples de réalisation donnés à titre indicatif et en référence aux dessins annexés sur lesquels:

– la fig. 1 représente un premier mode de réalisation d'un dispositif de vérification d'un ressort conforme à l'invention,

– les figures 2a à 2d illustrent le fonctionnement du dispositif représenté sur la fig. 1,

– la fig. 3 représente un deuxième mode de réalisation de l'invention,

– la fig. 4 représente un troisième mode de réalisation de l'invention.

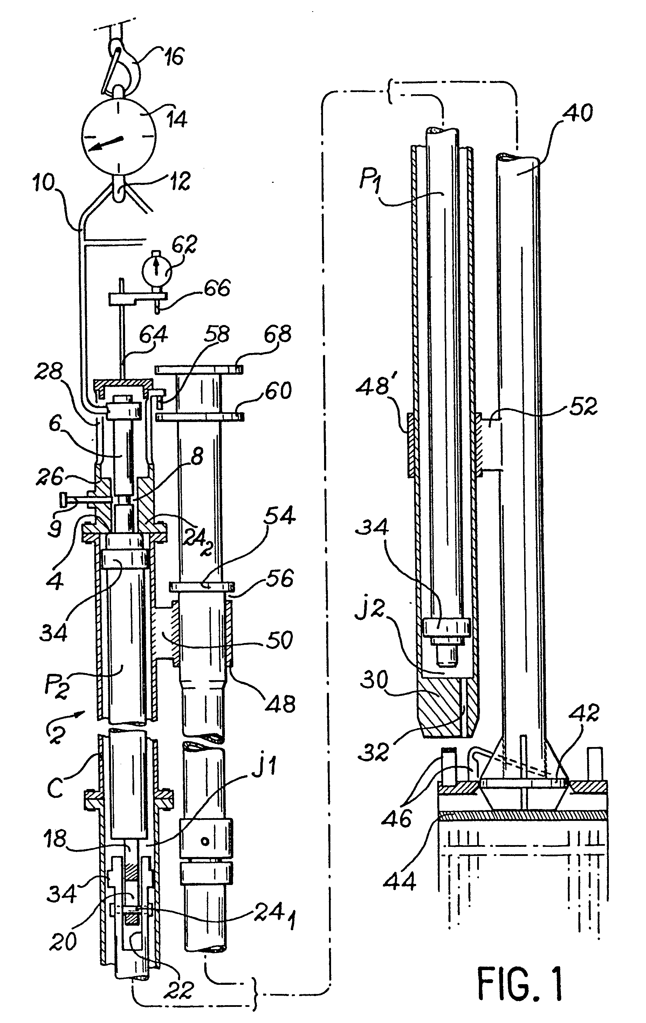

On a représenté sur la figure 1 un premier mode de réalisation du dispositif de vérification à distance d'un ressort réalisé conformément à l'invention. Il comporte trois masses mobiles, une masse P1, une masse P2 et la colonne C. Chacune des masses P1 et P2 se présente sous la forme d'un cylindre allongé. La masse P2 comporte à sa partie supérieure un épaulement 4 et est surmontée d'une partie de plus faible diamètre 6, dans laquelle est pratiquée une rainure circulaire 8. La partie 6 est fixée à un anneau de manutention 10 qui est lui-même accroché au crochet 12 d'un dynamomètre 14. Le dynamomètre 14 est suspendu au crochet 16 d'un appareil de levage (non représenté) tel qu'un palan. Un doigt de verrouillage 9 permet de verrouiller la colonne C pendant le déplacement de l'ensemble.

A sa partie inférieure, la masse P2 comporte un tenon 18 dans lequel est pratiqué un trou oblong 20. Le tenon 19 pénètre dans une fourche 22 pratiquée à la partie supérieure de la masse P1. Un jeu permet le coulissement des deux pièces. Un axe $24_1$, solidaire de la fourche de la pièce P1, traverse le trou oblong 20. La masse P1 est ainsi suspendue à la masse P2 tout en pouvant coulisser par rapport à cette dernière avec un certain débattement limité par la longueur du trou oblong 20.

Les masses P1 et P2 sont disposées à l'intérieur d'une colonne C qui se présente sous la forme d'un cylindre creux.

A sa partie supérieure la colonne C comporte un épaulement intérieur $24_2$. Afin de pouvoir introduire les masses P1 et P2, il a été nécessaire, dans l'exemple décrit, de réaliser la colonne C en plusieurs parties démontables. Comme on peut le voir sur la figure 1, l'épaulement $24_2$ est obtenu au moyen d'une tête 26 fixée par tout moyen approprié sur la colonne C. La tête 26 est creuse pour recevoir la partie 6 de la masse P2. Elle comporte de part et d'autre de larges ouvertures 28 qui permettent le passage de l'anneau de manutention 10.

Lorsque l'ensemble du dispositif est suspendu à l'anneau de manutention 10, la colonne C repose sur l'épaulement 4 par l'intermédiaire de l'épaulement 24. Dans cette position, on remarque l'existence d'un jeu $j_1$ entre les pièces P1 et P2 et d'un jeu $j_2$ entre l'extrémité inférieure de la masse P1 et le fond 30 de la colonne C. Un conduit 32 pratiqué dans le fond 30 met en communication l'intérieur et l'extérieur de la colonne C. Ce conduit permet à l'eau de pénétrer à l'intérieur de la colonne lorsque le dispositif est immergé dans l'eau de la piscine de stockage des assemblages.

Les masses P1 et P2 peuvent être déplacés en translation à l'intérieur de la colonne C avec un débattement donné par la construction du dispositif et en particulier par la valeur des jeux $j_1$ et $j_2$. Des couronnes de guidage 34 pratiquées sur les masses pendant leur translation.

Le dispositif représenté sur la figure 1 comporte encore une colonne de guidage 40 munie d'un pied 42 qui prend appui sur la pièce d'extrémité supérieure 44 d'un assemblage combustible schématisé sur la figure 1. La pièce d'extrémité supérieure 44 comporte quatre ressorts identiques 46 dont trois seulement sont visibles sur la figure. L'un des ressorts est vu de profil tandis que les deux autres sont vus en bout. Chaque ressort 46 est fixé à l'une de ses extrémités à la pièce d'extrémité supérieure 44. Son autre extrémité est guidée dans la pièce d'extrémité supérieure. Ces ressort ont pour fonction, de manière classique, d'appliquer l'assemblage combustible contre la plaque inférieure du cœur pendant le fonctionnement du réacteur. Le dispositif de l'invention permet de vérifier la caractéristique de chacun de ces ressorts.

Deux colliers de guidage 48 assurent le guidage de la colonne C relativement à la colonne de guidage 40. Une nervure 50 rend le collier supérieur 48 solidaire de la colonne C. Une nervure 52 relie le collier inférieure 48' à la colonne de guidage 40. En outre, le collier 48 supérieur permet la suspension de la colonne 40. A cet effet, la colonne 40 comporte une collerette 54 contre laquelle l'anneau supérieur 48 vient en contact lorsque l'ensemble est suspendu. Dans la position représentée sur la figure 1, le pied 42 repose sur la pièce d'extrémité supérieure et la colonne C a été représentée dans une position légèrement abaissée, ce qui détermine un jeu 56 entre le collier 48 et la collerette 54. Toutefois, dans cette position, le fond 30 de la colonne C ne repose pas encore sur un ressort 46, comme on peut le constater sur la figure.

On note encore la présence d'un index 58 sur la tête 26. L'index 58 peut pénétrer à l'intérieur d'un orifice de positionnement (non représenté) pratiqué dans la collerette 60, lorsque la colonne C se trouve à l'aplomb d'un ressort 46. La collerette 60 comporte quatre orifices identiques répartis à 90° sur la collerette 60 et correspondant à chacun des quatre ressorts 46. Dans la position représentée sur la figure 1, l'index 58 n'est pas encore engagé à l'intérieur du trou de positionnement.

Un comparateur 62, monté sur une tige 64 solidaire de la tête 26 permet de mesurer le déplacement relatif de la colonne C par rapport à la colonne de guidage 40. Pour cela on fait coulisser le support du comparateur le long de la tige 64 jusqu'à ce que sa pointe 66 vienne en contact avec l'extrémité de la colonne 60, laquelle se termine par un plateau 68.

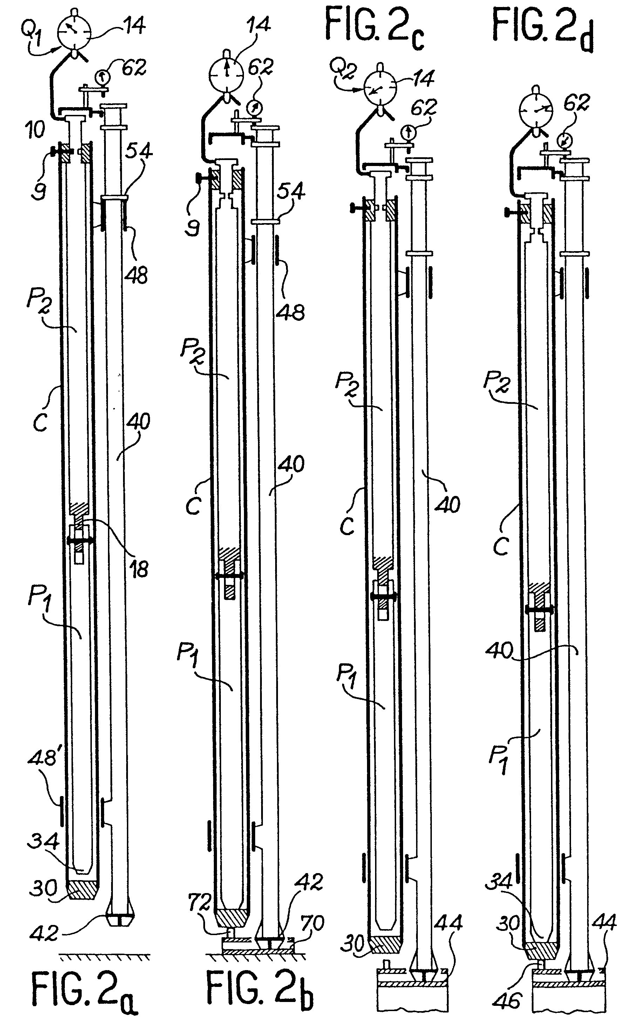

On décrit maintenant, en référence à la figure 2, le fonctionnement du dispositif représenté sur la figure 1.

Sur la figure 2a, le dispositif de l'invention est suspendu à l'anneau de transport 10, la colonne C repose sur l'épaulement 4 de la masse P2. La colonne de guidage 40 est suspendue au collier 48 par la collerette 54. La masse P1 est retenue à la masse P2 par l'axe $24_1$. Ainsi, on constate que la masse P1, la colonne C et la colonne de guidage 40 sont toutes les trois suspendues à la masse P2 qui est elle-même fixée à l'anneau de manutention. Le dynamomètre 14 indique une charge $Q_1$ égale au poids de l'ensemble du dispositif. Le doigt de verrouillage 9 est enfoncé dans la rainure 8.

Sur la figure 2b, la colonne 40 repose sur une boîte de réglage 70. La boîte de réglage 70 est géométriquement semblable à la pièce d'extrémité supérieure. Elle comporte un faux ressort 72 dont la hauteur est égale à la hauteur libre d'un ressort de l'assemblage neuf. Cela permet de régler le comparateur 62. A cet effet, on le fait coulisser sur la tige 64 jusqu'à ce que le bout 66 soit appliqué sur le plateau 68. On relève alors une indication z arbitraire qui permettra de déterminer ultérieurement l'ordonnée à l'origine de chacun des ressorts 46 et de dire si ces ressorts présentent ou non une déformation permanente. Le dynamomètre 14 indique une charge nulle car l'ensemble du dispositif repose sur la boîte de réglage 70.

L'opération de réglage du comparateur ayant été faite, on présente le dispositif au-dessus de la pièce d'extrémité supérieure 44 (figure 2c). La colonne de guidage 40 repose sur cette pièce d'extrémité 44. Les masses P1 et P2 et la colonne C sont en revanche suspendues au crochet du dynamomètre 14. Ce dernier indique une charge $Q_2$ égale au poids dans l'eau de ces trois masses car comme on l'a dit précédemment, l'assemblage combustible irradié est immergé sous une certaine hauteur d'eau. La hauteur du dispositif est supérieure à cette hauteur d'eau de manière que les appareils de mesure ne soient pas immergés. A partir de la position représentée sur la figure 2c, on descend progressivement le point de fixation du dynamomètre, par exemple au moyen d'un palan à chaînes (non représenté). Une première déviation de l'aiguille du comparateur indique le moment où le fond 30 de la colonne C entre en contact avec le ressort 46 à vérifier. A ce moment il y a contact théorique entre la colonne C et le ressort, c'est-à-dire que la masse de la colonne C ne repose pas encore sur le ressort. L'indication du dynamomètre est donc sensiblement la même qu'à l'étape représentée sur la figure 2c si l'on néglige la poussée d'Archimède correspondant au volume d'eau déplacé par l'abaissement de la colonne C de la première position de la figure 2c à la position de contact théorique (non représentée).

On relève la cote x du comparateur. La déformation permanente du ressort est donnée par la différence z-x. Cette valeur correspond à l'ordonnée à l'origine de la caractéristique du ressort.

On continue à descendre le point de fixation du dynamomètre 14 au moyen du palan à chaîne. On arrête la descente lorsque le dynamomètre indique une valeur égale à $Q_2$ diminuée de la masse – connue par construction – de la colonne C. Dans cette position le poids de la colonne repose sur le ressort 46. En revanche, les masses P1 et P2 restent suspendues à l'anneau de manutention 10. Il y a donc apparition d'un jeu entre l'épaulement 4 de la masse P2 et l'épaulement $24_2$ de la colonne C, mais il n'y a pas encore contact entre l'extrémité inférieure de la masse P1 et le fond 30 de la colonne C. En d'autres termes, le jeu $j_1$ figuré sur la figure 1 n'est pas encore annulé.

Sous l'effet du poids de la colonne C le ressort 46 fléchit, et le comparateur 62 fournit une indication y. Si la masse de la colonne C est par exemple de cinquant kilogrammes, la différence y-z donne la flèche du ressort sous une charge de 50 kg. On obtient ainsi un deuxième point de la caractéristique du ressort.

Le dispositif décrit permet d'obtenir encore deux autres points qui correspondent à la mise en application des masses P1 et P2 sur le ressort.

On continue à descendre lentement le point de fixation du dynamomètre 14 jusqu'à ce que ce dernier indique que sa charge a diminué du poids de la masse P1, qui s'applique ensuite sur le ressort. La partie inférieure de la masse P1 vient en contact avec le fond 30 de la colonne C. Dans cette position, son poids est transmis au ressort 46. On relève l'indication correspondante z du comparateur, ce qui permet d'obtenir, comme précédemment, un troisième point de la caractéristique donnant la flèche réelle du ressort sous une charge égale au poids de la colonne C et de la masse P1.

En continuant à descendre le point de fixation du dynamomètre, on arrive à la position représentée sur la figure 2d, dans laquelle les masses P1 et P2 et la masse de la colonne C reposent sur le ressort 46. On relève alors une quatrième indication du comparateur 62 qui permet d'établir un quatrième point de la caractéristique du ressort.

On vérifie successivement chacun des trois autres ressorts de la pièce d'extrémité supérieure 44 par rotation successive de 90° de la colonne C autour de la colonne de guidage 40. A chaque fois l'index 58 permet de verrouiller la colonne C dans une orientation angulaire correcte. Il est à remarquer que pour la vérification des trois autres ressorts, il n'est pas nécessaire de reprendre l'étape 2b correspondant au réglage du comparateur 62.

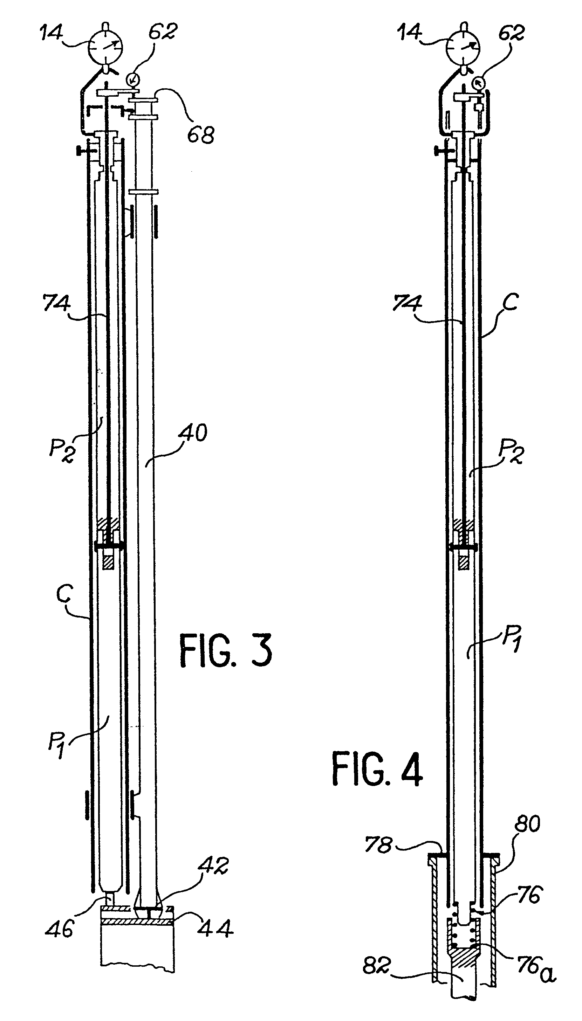

On a représenté sur la figure 3 un deuxième mode de réalisation de l'invention. Ce mode de réalisation diffère essentiellement de celui des figures 1 et 2, en ce que la colonne C est ouverte à sa partie inférieure. Par suite, la masse de la colonne ne peut pas reposer sur le ressort 46. On dispose donc de deux masses seulement, les masses P1 et P2, pour établir la caractéristique du ressort, ce qui est toutefois suffisant puisque cela permet d'en tracer trois points. Le premier point correspond à l'ordonnée à l'origine du ressort 46. On l'obtient, comme décrit en référence aux figures 2a à 2d, par l'indication du comparateur 62 au moment du contact théorique entre la masse P1 et le ressort 46. Un deuxième point est obtenu lorsque la masse P1 repose sur le ressort et un troisième lorsque les masses P1 et P2 reposent sur le ressort.

La colonne C ne joue pas le rôle de la masse inférieure, c'est-à-dire celle qui entre la première en contact avec le ressort. Dans ce mode de réalisation la masse inférieure est la masse P1. Etant donné que pour mesurer la flèche du ressort, il est nécessaire de mesurer le déplacement de cette masse inférieure, on a fixé une tige 74 à l'axe 24₁. La tige 74 passe à l'intérieur de la masse P2 et peut coulisser librement dans celle-ci. La tige 74 indique donc les déplacements de la masse P1 et elle permet de remonter cette indication au-dessus du niveau de l'eau. Le support du comparateur 62 a donc été fixé à la partie supérieure de la tige 74.

En revanche, en ce qui concerne le point de repère fixe solidaire de l'extrémité fixe du ressort, il n'y a pas de différence avec le mode de réalisation précédent. Ce point de repère est constitué ici également par le plateau 68 de la couronne de centrage 40.

On a représenté sur la figure 4, un troisième mode de réalisation de l'invention. Cette réalisation est adaptée à la vérification d'un ressort tel que le ressort hélicoïdal 76.

Le dispositif de la figure 4, comme celui de la figure 3, comporte seulement deux masses P1 et P2 permettant d'obtenir trois points de la caractéristique du ressort.

En revanche, la colonne de guidage 40 est inutile, car il n'est pas nécessaire de contrôler successivement plusieurs ressorts. Le guidage des masses P1 et P2 est obtenu simplement par la colonne C qui est fixe pendant les mesures. C'est également la colonne C elle-même qui fournit un point de repère fixe solidaire de l'extrémité inférieure 76a du ressort hélicoïdal. A cet effet, la colonne C comporte une collerette extérieure 78 qui vient en appui sur le cylindre 80 qui est lui-même fixe par rapport à la base d'appui 82 du ressort 76.

La colonne C assure le guidage des deux masses P1 et P2 lors de leur translation verticale.

Comme pour le mode de réalisation de la figure 3, une tige 74 solidaire de la masse P1 permet de remonter le déplacement de cette masse, et donc de suivre, au moyen du comparateur 62, la flèche du ressort.

**Revendications**

1. Dispositif pour mesurer à distance la caractéristique d'un ressort (46), ce dispositif comportant des moyens pour appliquer des efforts connus sur le ressort et des moyens pour en mesurer la flèche correspondante, dans lequel les moyens pour appliquer des efforts connus sont constitués par:

– un ensemble de masses connues (C, P1, P2) déplaçables en translation selon une direction verticale, chacune des masses pouvant elle-même être déplacée verticalement dans certaines limites par rapport aux autres masses de sorte que, lorsqu'on les descend, leurs poids sont supportés successivement par le ressort (46) et de ce fait s'additionnent,

– des moyens (14) pour déterminer le moment où, au cours de la descente de l'ensemble, une masse donnée repose sur le ressort (46),

– les moyens (62) pour mesurer la flèche du ressort (46), étant constitués par des moyens pour mesurer le déplacement de la masse inférieure par rapport à un point de repère (68) fixe par rapport au ressort (46), caractérisé en ce que les moyens pour déterminer le moment où une masse donnée repose sur le ressort (46) sont constitués par un dynamomètre (14) solidaire d'un point de fixation (16) déplaçable verticalement en translation, l'ensemble des masses (C, P1, P2) étant suspendu au crochet (12) du dynamomètre (14), et en ce qu'il comporte trois masses, respectivement:

– une masse (P2), ci-après dénommée masse supérieure de forme cylindrique allongée suspendue par sa partie supérieure (6) au crochet (12) du dynamomètre (14) et présentant, à son extrémité supérieure un épaulement (4),

– une masse (P1), ci-après dénommée masse inférieure également de forme cylindrique allongée, disposée sous la masse supérieure (P2) et suspendue par un moyen de suspension à la partie inférieure de cette dernière avec un jeu axial (j₁),

– une colonne (C) se présentant sous la forme d'un cylindre creux dans lequel sont disposées les masses inférieure et supérieure (P1 et P2), ladite colonne comportant un épaulement intérieure (24) par lequel elle repose sur l'épaulement (4)
de la masse supérieure (P2) lorsque l'ensemble
des masses est suspendu.

2. Dispositif selon la revendication 1, caractérisé en ce que le moyen de suspension de la masse inférieure $(P_1)$ à la masse supérieure $(P_2)$ est
constitué par un axe $(24_1)$ fixé par ses deux extrémités à une fourche (22) de la masse inférieure
$(P_1)$ qui coulisse dans un trou oblong du tenon
(18) de la masse supérieure $(P_2)$.

3. Dispositif selon la revendication 1, caractérisé en ce qu'il comporte des moyens de guidage
constitués par une colonne de centrage (40) qui
prend appui sur une pièce (44) solidaire de l'extrémité fixe du ressort (46) et par des moyens (48,
50, 52) pour assurer un guidage de la colonne (C)
par rapport à la colonne de centrage (40).

4. Dispositif selon la revendication 3, caractérisé en ce que les moyens pour assurer un guidage de la colonne (C) par rapport à la colonne de
centrage (40) sont constitués par des colliers (48,
48').

5. Dispositif selon la revendication 3, dans lequel la colonne (C) est fermée à son extrémité inférieure, les moyens pour mesurer le déplacement de la masse inférieure $(P_1)$ étant constitués
par un comparateur (14) qui mesure le déplacement de l'extrémité supérieure (26) de la colonne
(C) par rapport à un repère fixe (68) pris sur la colonne de centrage (40).

6. Dispositif selon la revendication 3, dans lequel la colonne (C) est ouverte à son extrémité inférieure, les moyens pour mesurer le déplacement de la masse inférieure (P1) étant constitués
par une tige (74) dont une extrémité est solidaire
de la masse inférieure (P1) et par un comparateur
(14) qui mesure le déplacement de l'extrémité supérieure de la tige (74) par rapport à un repère
fixe (68) pris sur la colonne de centrage (40).

7. Dispositif selon la revendication 1, dans lequel la colonne (C) est ouverte à son extrémité inférieure, les moyens de guidage des masses inférieure et supérieure (P1 et P2) étant constitués
par la colonne (C) elle-même, cette colonne reposant, pendant le fonctionnement du dispositif,
sur une pièce fixe (80) solidaire de l'extrémité fixe
du ressort (76), les moyens pour mesurer le déplacement de la masse inférieure (P1) étant constitués par une tige (74) dont une extrémité est
solidaire de cette masse (P1) et par un comparateur (14) qui mesure les déplacements de l'extrémité supérieure de la tige (74) par rapport à un repère fixe pris sur la colonne.

**Patentansprüche**

1. Vorrichtung zum Messen der Charakteristik
einer Feder (46) auf Abstand, wobei diese Vorrichtung Mittel zum Anwenden bekannter Belastungen auf die Feder und Mittel zum Messen der
entsprechenden Durchbiegung umfasst, wobei
die Mittel zum Anwenden der bekannten Belastungen gebildet sind durch:

– eine Gesamtheit bekannter Massen (C, P1,
P2), die längs einer vertikalen Richtung verschiebbar sind, wobei jede Masse selbst innerhalb gewisser Grenzen in Bezug auf die anderen
Massen derart vertikal verschiebbar ist, dass,
wenn man sie absenkt, ihre Gewichte aufeinanderfolgend von der Feder (46) abgestützt werden
und sich deshalb aufsummieren,

– Mittel (14), um den Zeitpunkt festzustellen,
zu dem während des Absenkens der Gesamtheit
eine gegebene Masse auf der Feder (46) ruht,

– wobei die Mittel (62) zum Messen der Durchbiegung der Feder (46) von Mitteln zum Messen
der Verschiebung der unteren Masse in Bezug
auf einen Bezugspunkt (68) gebildet sind, der bezüglich der Feder (46) festliegt, dadurch gekennzeichnet, dass die Mittel zum Bestimmen des
Zeitpunktes, zu dem eine gegebene Masse auf
der Feder (46) ruht, von einem Dynamometer (14)
gebildet sind, welches an einem vertikal verschiebbaren Befestigungspunkt (16) befestigt ist,
wobei die Gesamtheit der Massen (C, P1, P2) an
dem Haken (12) des Dynamometers (14) aufgehängt sind und drei Massen umfasst, nämlich:

– eine zylinderförmige, längliche Masse (P2),
die im folgenden obere Masse genannt wird und
mit ihrem oberen Abschnitt (6) an dem Haken
(12) des Dynamometers (14) aufgehängt ist und
an ihrem oberen Ende eine Schulter (4) aufweist,

– eine ebenfalls zylinderförmige, längliche
Masse (P1), die im folgenden untere Masse genannt wird und unter der oberen Masse (P2) angeordnet und mittels einer Aufhängeinrichtung
an dem unteren Abschnitt dieser letzteren mit
einem axialen Spiel $(j_1)$ aufgehängt ist,

– eine Säule (C), die die Form eines Hohlzylinders aufweist, in dem die obere und die untere
Masse (P1 und P2) angeordnet sind, wobei die
Säule eine innere Schulter (24) aufweist, mit der
sie auf der Schulter (4) der oberen Masse (P2)
ruht, wenn die Gesamtheit der Massen aufgehängt ist.

2. Vorrichtung nach Anspruch 1, dadurch gekennzeichnet, dass die Einrichtung zum Aufhän-
gen der unteren Masse $(P_1)$ an der oberen Masse
$(P_2)$ von einer Achse $(24_1)$ gebildet ist, die mit ihren beiden Enden an einer Gabel (22) der unteren
Masse $(P_1)$ befestigt ist und in einem Längsloch
des Zapfens (18) der oberen Masse $(P_2)$ verschiebbar ist.

3. Vorrichtung nach Anspruch 1, dadurch gekennzeichnet, dass sie Führungsmittel umfasst,
die von einer Zentrierungssäule (40), die sich auf
einem mit dem festen Ende der Feder (46) festverbundenen Teil (44) abstützt, und von Mitteln
(48, 50, 52) gebildet sind, um eine Führung der
Säule (C) in Bezug auf die Zentrierungssäule (40)
sicher zu stellen.

4. Vorrichtung nach Anspruch 3, dadurch gekennzeichnet, dass die Mittel zum Sicherstellen
einer Führung der Säule (C) in Bezug auf die Zentrierungssäule (40) von Ringen (48, 48') gebildet
sind.

5. Vorrichtung nach Anspruch 3, bei der die
Säule (C) an ihrem unteren Ende geschlossen ist, die Mittel zum Messen der Verschiebung der unteren Masse $(P_1)$ von einem Komparator (14) gebildet sind, der die Verschiebung des oberen Endes (26) der Säule (C) in Bezug auf einen festen Bezugspunkt (68) misst, der an der Zentrierungssäule (40) abgenommen wird.

6. Vorrichtung nach Anspruch 3, bei der die Säule (C) an ihrem unteren Ende offen ist, die Mittel zum Messen der Verschiebung der unteren Masse (P1) von einer Stange (74), deren eines Ende fest mit der unteren Masse (P1) verbunden ist, und einem Komparator (14) gebildet sind, der die Verschiebung des oberen Endes der Stange (74) in Bezug auf einen festen Bezugspunkt (68) misst, der an der Zentrierungssäule (40) abgenommen wird.

7. Vorrichtung nach Anspruch 1, bei der die Säule (C) an ihrem unteren Ende offen ist, die Führungsmittel für die untere und obere Masse (P1 und P2) von der Säule (C) selbst gebildet sind, die während der Arbeitsweise der Vorrichtung auf einem fest mit dem festen Ende der Feder (76) verbundenen Teil (80) ruht, die Mittel zum Messen der Verschiebung der unteren Masse (P1) von einer Stange (74), deren eines Ende mit dieser Masse (P1) verbunden ist, und einem Komparator (14) gebildet sind, der die Verschiebungen des oberen Endes der Stange (74) in Bezug auf einen an der Säule abgenommenen, festen Bezugspunkt misst.

**Claims**

1. Device for remotely measuring the characteristic of a spring (46), this device comprising means for applying known stresses to the spring and means for measuring the corresponding index thereof, wherein the means for applying known stresses comprise:
   – a set of known masses (C, P1, P2) displaceable in translation in a vertical direction, each one of the masses itself being able to be displaced vertically within certain limits relative to the other masses in such a manner that, when they are moved downwards, their weights are supported successively by the spring (46) and as a result of this are added,
   – means (14) for determining the moment when, in the course of the descent of the set, a given mass rests on the spring (46),
   – the means (62) for measuring the index of the spring (46) comprising means for measuring the displacement of the lower mass relative to a reference point (68) fixed in relation to the spring (46), characterized in that the means for determining the moment when a given mass rests on the spring (46) comprise a dynamometer (14) forming a solid unit with a fixation point (16) displaceable vertically in translation, the set of masses (C, P1, P2) being suspended from the hook (12) of the dynamometer (14), and in that it comprises three masses, respectively:

– a mass (P2), hereinafter referred to as the upper mass, of elongate cylindrical shape, suspended by its upper part (6) from the hook (12) of the dynamometer (14) and exhibiting, at its upper end, a shoulder (4),
– a mass (P1), hereinafter referred to as the lower mass, likewise of elongate cylindrical shape, disposed below the upper mass (P2) and suspended by a suspension means from the lower part of the latter with an axial play $(j_1)$,
– a column (C) which is present in the form of a hollow cylinder, in which the lower and upper masses (P1 and P2) are disposed, the said column including an internal shoulder (24) by means of which it rests on the shoulder (4) of the upper mass (P2) when the set of masses is suspended.

2. Device according to Claim 1, characterized in that the means for suspension of the lower mass $(P_1)$ from the upper mass $(P_2)$ comprises a shaft $(24_1)$ fixed by its two ends to a fork (22) of the lower mass $(P_1)$ which slides in an oblong hole of the tenon (18) of the upper mass $(P_2)$.

3. Device according to Claim 1, characterized in that it includes guide means comprising a centering column (40) which is supported on a part (44) forming a solid unit with fixed ends of the spring (46) and means (48, 50, 52) for assuring guiding of the column (C) relative to the centering column (40).

4. Device according to Claim 3, characterized in that the means for assuring guiding of the column (C) relative to the centering column (40) comprise collars (48, 48').

5. Device according to Claim 3, wherein the column (C) is closed at its lower end, the means for measuring the displacement of the lower mass $(P_1)$ comprising a comparator (14) which measures the displacement of the upper end (26) of the column (C) relative to a fixed reference mark (68) provided on the centering column (40).

6. Device according to Claim 3, wherein the column (C) is open at its lower end, the means for measuring the displacement of the lower mass (P1) comprising a rod (74), one end of which forms a solid unit with the lower mass (P1) and a comparator (14) which measures the displacement of the upper end of the rod (74) relative to a fixed registration mark (68) provided on the centering column (40).

7. Device according to Claim 1, wherein the column (C) is open at its lower end, the means for guiding the lower and upper masses (P1 and P2) comprising the column (C) itself, this column resting, during the operation of the device, on a fixed part (80) forming a solid unit with the fixed end of the spring (76), the means for measuring the displacement of the lower mass (P1) comprising a rod (74), one end of which forms a solid unit with this mass (P1) and a comparator (14) which measures the displacements of the upper end of the rod (74) relative to a fixed reference mark provided on the column.

FIG. 1

0 098 188

FIG. 2c    FIG. 2d

FIG. 2a    FIG. 2b

11

FIG. 3

FIG. 4